# EUROPEAN PATENT SPECIFICATION

(11) **EP 3 002 222 B1**
(45) Date of publication and mention of the grant of the patent: **12.04.2017**
(21) Application number: 15179786.7
(22) Date of filing: 05.08.2015
(51) Int. Cl.: B65B 5/10, B65G 47/08, B65B 5/12

(54) **METHOD AND SYSTEM FOR GROUPING INDIVIDUAL PRODUCTS INTO PRODUCT GROUPS AND FOR FEEDING SAID PRODUCT GROUPS TO HANDLING MEANS, IN PARTICULAR FOR FEEDING THEM TO A PACKAGING MACHINE, FOR EXAMPLE OF THE "FLOW PACK" TYPE OR A CASER PACKER OR THE LIKE**
VERFAHREN UND SYSTEM ZUR GRUPPIERUNG VON EINZELPRODUKTEN IN PRODUKTGRUPPEN UND ZUM ZUFÜHREN DIESER PRODUKTGRUPPEN ZU HANDHABUNGSMITTELN, INSBESONDERE ZUM ZUFÜHREN DERSELBEN ZU EINER VERPACKUNGSMASCHINE WIE ZUM BEISPIEL ZU EINER FLOWPACK-MASCHINE ODER EINEM KARTONPACKER ODER DERGLEICHEN
PROCÉDÉ ET SYSTÈME POUR GROUPER DES PRODUITS INDIVIDUELS DANS DES GROUPES DE PRODUITS ET POUR FOURNIR CES GROUPES DE PRODUITS À DES MOYENS DE MANUTENTION, EN PARTICULIER POUR LES AMENER À UNE MACHINE D'EMBALLAGE, PAR EXEMPLE DE TYPE « SAC THERMOSOUDÉ» OU GARNITURE D'ÉTANCHÉITÉ D'ENCAISSAGE OU SIMILAIRE

(30) Priority: 30.09.2014 IT MI20141704
(43) Date of publication of application: 06.04.2016
(73) Proprietor: Cavanna S.p.A., 28077 Prato Sesia (NO) (IT)
(72) Inventor: GIACOBBE, Fulvio, 28075 Grignasco (NO) (IT); BARALDO, Stefano, 28100 Novara (NO) (IT)
(74) Representative: Kratter, Carlo

(56) References cited:
- EP-A1- 2 746 165
- US-A1- 2010 326 893

## Description

The object of the present invention is a method for grouping individual products in positioning elements suitable for receiving each a preset group of said individual products, and for loading a packaging machine, according to the pre-characterizing section of claim 1.

It is worth emphasizing that said product groups might consist of products that are identical for all individual groups, or even of groups all comprising the same number of products but where the products are not identical in the various groups.

EP856465 describes a method of the type specified above wherein the individual products are loaded in the positioning elements by loading devices (robots), in work areas of said devices. According to the prior art, an outlet conveyor that transports the positioning elements is a conventional conveyor, and the positioning elements are containers, for instance boxes, provided on said outlet conveyor, which are filled by a plurality of loading devices suitable for drawing one product at a time from an inlet conveyor, also of the mat conveyor type, and for depositing it in one of the seats of the containers present on the outlet conveyor, whenever the container is located in a work area of said devices. According to the prior art, the speed of the outlet conveyor and/or of the loading devices and/or of the inlet conveyor are controlled:
- either with respect to the quantity of the individual products present on the inlet conveyor,
- or by controlling the rate of the products to be loaded, fed on the inlet conveyor, and by controlling the last loading device, so that only completely full positioning elements leave the work area of said last loading device. The loading method and system described in EP856465 are suitable for loading the positioning elements (i.e. the containers) in relatively long times and output to the outlet conveyor full containers, according to a sequence that is discontinuous in time, which does not allow to associate said loading system directly with packaging machines that require a continuous and constant feeding of the loaded containers.

A purpose of the present invention is to provide a method of the type specified above that allows to speed-up the loading of the positioning elements and to output a continuous and constant feeding of loaded positioning elements.

These purposes and others which will be apparent to one skilled in this sector are achieved by a method in accordance with the characterizing section of the appended claims.

For a better understanding of the present method, the following drawings are attached, for explanatory, not-limitative purposes, wherein:
Fig. 1 shows a schematic view of a loading system suitable for implementing the method according to the invention,
Fig. 2 shows a side and partial schematic view of a first embodiment of a conveyor of the system shown in figure 1,
Fig. 3 shows a schematic partial side view of a second embodiment of the conveyor shown in figure 2,
Figs. 4A and 4B show a schematic side view and a schematic plan view respectively of two possible modes to group individual products,
Fig. 5 shows a schematic and partial top view of a portion of the system,
Figs. 6A-D show schematic partial and top views of different operating steps of a transfer of products from a first conveyor to a second conveyor,
Figs. 7A-7B show schematic partial and top views of different further operating steps of a transfer of products from a first conveyor to a second conveyor,
Fig. 8 shows a schematic view of the functional links of the system.

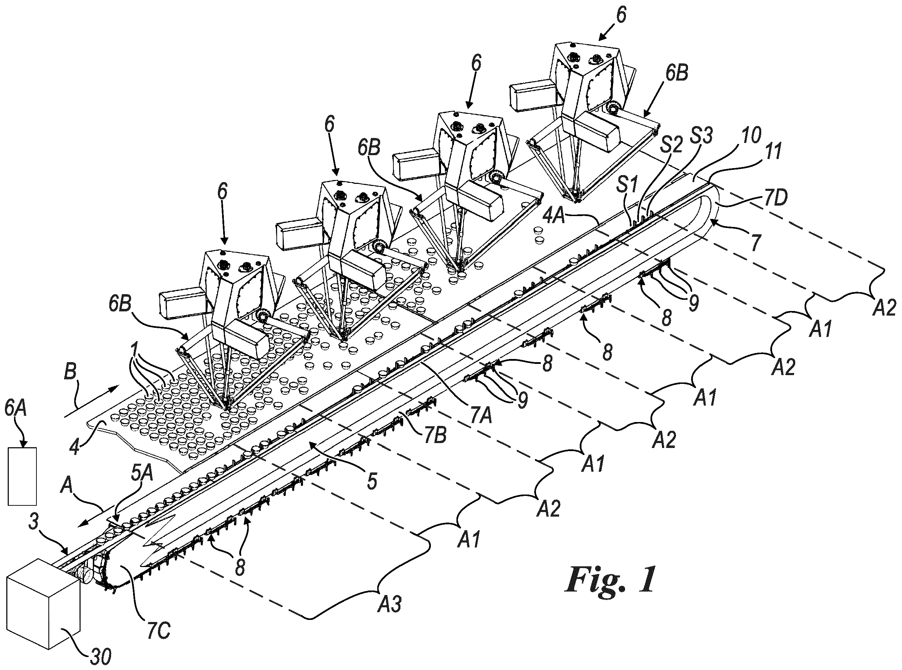

Figure 1 deals with a system for grouping individual products 1 into product groups 2 and for feeding said product groups 2 to handling means 3, in particular for feeding them to a packaging machine 30, for example of the "flow pack" type or a case packer or the like.

The system comprises:
- at least one first conveyor 4, of a traditional type, on which there are randomly or non randomly spread a plurality of products 1 (which are either of the same type or of different types),
- a second conveyor 5, of a traditional type, which comprises a linear motor including a stator 7 and a plurality of transport units 8, movable independently of each other, along the stator, and comprising each at least one positioning element 12 suitable for supporting said product groups 2,

- a plurality of loading devices (robots) 6, of a traditional type, suitable for drawing at least one individual product at a time from the first conveyor 4 and for depositing it in said positioning elements 12,
- wherein said positioning elements comprise each a plurality of preset deposit positions (S1-S4) where said individual products 1 are deposited.

A system of the type mentioned above is described in patent application EP2746165 by the same applicant.

In the example depicted in the figures, the stator 7 of the linear motor is preferably of the slip-ring type and comprises two straight branches 7A and 7B parallel and superimposed to each other, joined to each other by two arched branches 7C and 7D, in such a way as to create an upper active straight branch 7A in which the transport units 8 handle the positioning elements 12 in correspondence with the loading devices 6 so as to form in said positioning elements the desired product groups 2, and a lower return straight branch of the transport units 8 and of their respective empty positioning elements.

Preferably is the first conveyor 4 of a type featuring a straight mat; and a portion of the two straight branches 7A and 7B of the stator 7 of the linear motor 7 is parallel to said straight mat.

It is worth emphasizing that the return branch 7B and the curved ones 7C and 7D might be positioned and/or have a shape different from that depicted in the figures, for instance they might develop in the same plane as the branch 7A, and/or several curved elements and/or elements featuring a curvature different from the 90° one depicted in the drawings might be provided.

In the present context, by positioning element 12 suitable for receiving each a predetermined group 2 of individual products, we mean one or several support elements constrained to the transport unit 8 and shaped in such a way as to delimit a plurality of preset deposit positions (cells) (S1-S3) in which to deposit said individual products 1, or one or several containers, for instance boxes, removably connected to the transport unit and supported and carried by said unit.

For instance, the transport unit 8 can comprise a mover and the support element can comprise one or several supports featuring a tray-like shape, rigidly connected to the mover (as described in EP2746165), wherein every tray includes for every product, a plurality of preset positions to deposit the products themselves.

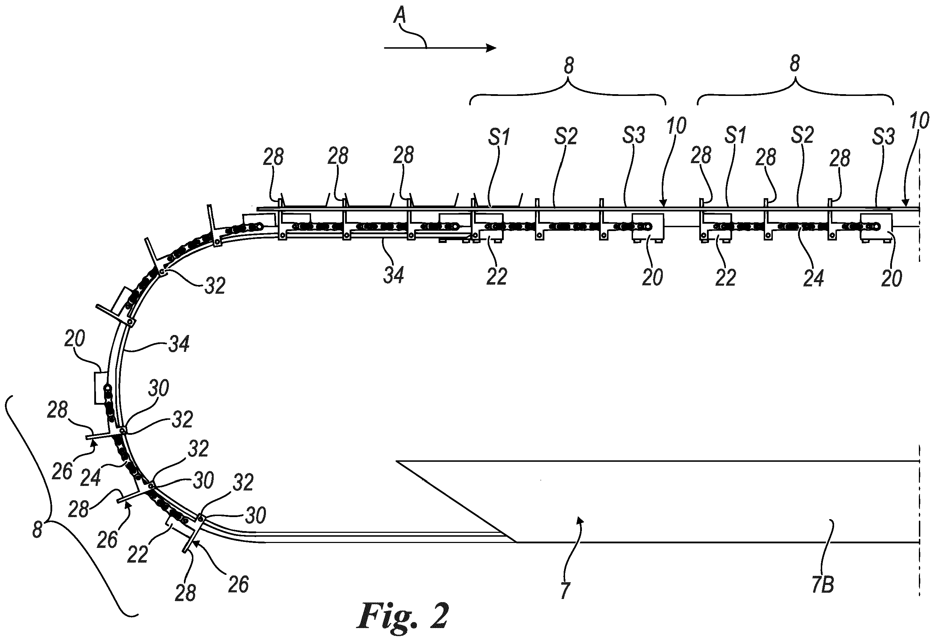

Alternatively can the transport unit be of the type described in the Italian patent application ITTO2014A000236 by the same applicant. According to this embodiment (depicted in figure 2) every transport unit 8 comprises a driving mover 20, a tensioner element 22, and a flexible connection element 24, which connects the driving mover to its respective tensioner element, wherein the tensioner element holds its respective flexible connection element 24 stretched.

Preferably, are the driving mover 20 and the tensioner element 22 located at the head and the tail respectively of their respective transport unit 8 as referred to the direction of movement.

The driving mover 20 is a mover of the linear motor 14, controlled by the electronic control unit of the linear motor of the conveyor 5 to impart the desired position, speed, or acceleration to its transport unit 8. The driving mover 20 cooperates with the stator 7 via a magnetic coupling and is electronically controlled according to modes well known in the sector of the linear motors.

The purpose of the tensioner element 24 is to keep its respective flexible connection element 24 properly tensioned, both during the movement of its respective transport unit 8 and in the condition wherein its respective transport unit 8 is stationary.

Constructively wise, the tensioner element 22 can be formed of a linear motor's mover or be formed of a braking element.

Should the tensioner element 22 be formed of a linear motor's mover, it can be controlled in such a way as to submit the flexible connection element 24 to a continuous active tensioning. In this event, for every transport unit 8 use is made of two identical movers for the driving mover 20 and tensioner element 22 functions. The driving mover 20 sets the position of its respective transport unit 18, whereas that mover which operates as a tensioner element 18 is controlled by the electronic control unit on the basis of a force control.

Alternatively, the linear motor's mover that operates as a tensioner element can be controlled in such a way as to exert a discontinuous active tensioning. It is a case similar to the previous one but simpler. If the flexible connection elements 24 of the transport unit 8 are relatively short and their lengthening due to wear is relatively small as absolute value, then the flexible connection element 24 is tensioned periodically only, for instance upon switching the machine on or while stopping the transport units 8. During normal operation, the driving mover 20 and the mover that operates as an tensioner element 22 operate as an electrical axis. In this event, the force control is applied, the speed being null (transport unit stationary) for a limited period of time. This control mode makes it possible to increase the life time of the flexible connection elements 24 because they are not subjected to a continuous tension during their operation. The hypothesis for the correct operation of this control mode is that the flexible connection element 24 does not lengthen too much during normal operation, so as not to be obliged to continuously carry out such tensioning.

As a further alternative, the tensioner element 22 can be a braking element that performs a passive tensioning of the flexible connection element 24. This operating mode is more rudimentary but can be used in the case that the transport units 8 move at a low speed and no a high positioning accuracy is required. In this event, the tensioner element 22 offers a certain resistance to the onward movement. The braking action can be obtained in many different ways, for instance by friction or by using electrodynamic systems. For instance, the tensioner element might have a permanent magnet facing a stationary conductor plate. This way, an eddy current brake is implemented, which generates a braking force proportional to the speed of the transport unit 8.

The flexible connection element 24 in every transport unit 18 can be formed of a roller chain, a belt, a rope, or the like. In the present description and in the claims by "flexible connection element" we mean any bendable elements, including articulated connection elements like chains, in particular roller chains.

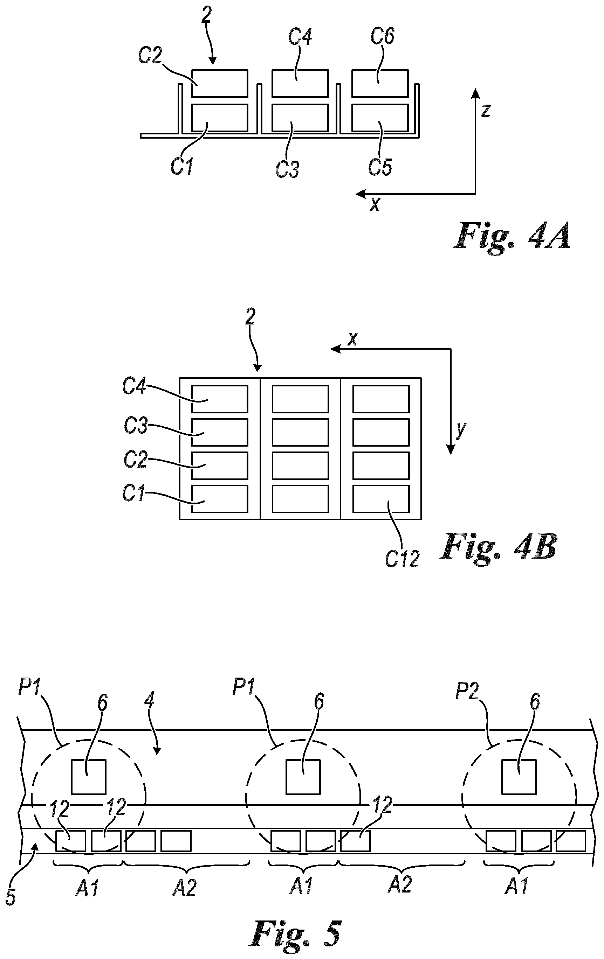

Every transport unit 8 comprises at least one transport element 26 connected to its respective flexible connection element 24. The transport elements 26 are suitable for transporting their respective products, product groups, or containers in the direction of movement A of the transport unit 8. The transport elements 26 are preferably articulated to their respective flexible connection element 24 around their respective axes orthogonal to the direction of movement A. Every transport unit 8 is preferably provided with a plurality of transport elements 26 arranged between the driving mover 20 and the tensioner element 22. In the embodiment depicted in figure 2 each transport element 26 comprises a finger 28, an articulation portion 30, and a guide portion 32. The figures, and more specifically figure 2, show that the articulation portion 30 is articulated to its respective flexible connection element 24 around an axis that is transversal with respect to the direction of movement A. The guide portions 32 of the transport elements 26 slidingly engage a stationary guide 34, figure 5, parallel to the stator 16 of the linear motor 14. The guide 34 can be formed, for instance, of a groove that extends along a path parallel to the stator 7. The articulation portions 32 can be provided with a pivot that is movable in the groove forming the guide 34.

With reference to figures 1 and 2, the conveyor 5 preferably comprises a stationary horizontal wall 10 located above the upper horizontal branch 7A of the stator 7, on which the products 1 deposited by the loading devices 6 lay and can slide. The wall 10 has a straight groove 11 parallel to the direction of transport A. Whenever the transport units 8 go along the upper horizontal branch of the stator 7, their respective fingers 28 project above the stationary wall 10 through a groove 11.

The fingers 28 of each of the transport elements 26 of the transport units 8, when projecting from the groove 11 of the plane 10, are suitable for forming each a housing or seat S1-S3 for receiving a product unloaded by the devices 6. In the embodiment here described, the set of the fingers 28 of a transport unit 8 of the type described above, make-up that which has previously been referred to as a positioning element 12 to position the products unloaded by the loading devices 6.

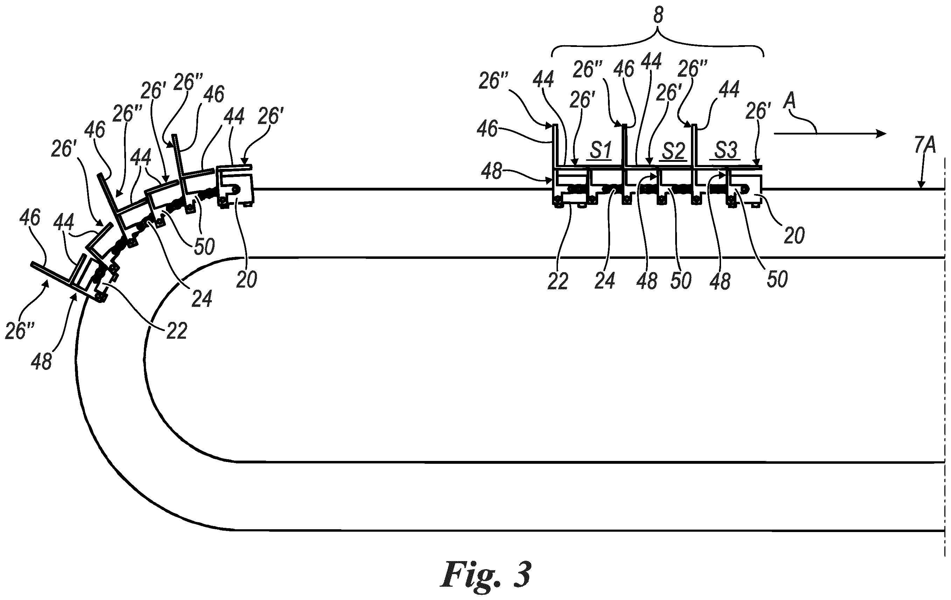

Figure 3 shows a further alternative embodiment of the transport unit 8. The elements corresponding to those previously described are identified by the same reference numerals, but with a prime symbol added thereto. In this case, the conveyor 5 does not include any horizontal wall 10 and the transport elements 26 are shaped in such a way as to support the products by themselves. In this embodiment, every transport element 26 comprises a wall 44 that is tangential with respect to direction of the movement A. The transport elements 26 can also feature a wall 46 radial with respect to the direction of movement A. In the example here illustrated there are provided transport elements 26' having the tangential wall 44 only alternating to transport elements 26" having both a tangential wall 44 an a radial wall 46.

Whenever the transport elements 26', 26" move along the upper horizontal branch 7A of the stator 1 the tangential walls 44 are horizontal and co-planar to each other. Every transport element 26', 26" is secured to a respective support 48 having an articulation portion 50 and a guide portion 52. The articulation portion 50 is articulated to its respective flexible connection element 44 around an axis that is transversal with respect to the direction of movement A. The guide portion 52 slidingly engages a guide parallel to the stator 16, in a similar way as described beforehand.

The linear motor 5 can be, for example, a linear synchronous motor (LSM), for instance one manufactured by Jacobs Automation LLC. The linear motor 5 comprises, according to an approach well known by those skilled in the matter, a plurality of movers movable along the stator independently of each other and individually controlled by an electronic control unit.

According to the invention, the active section of the second conveyor 5, i.e. that suitable for receiving and handling the products 1 drawn by the devices 6, is subdivided into a plurality of different operating areas:
- for every loading device 6 there is provided a loading area A1, engineered in such a way as to be capable of accommodating and, if necessary, making at least one positioning element 12 pause, and more preferably a plurality of positioning elements 12,
- before every loading area A1 there is provided an intermediate stacking area A2, engineered in such a way as to be capable of accommodating and, if necessary, make at least one positioning element 12 pause, and more preferably a plurality of positioning elements 12, before it reaches the next loading area,
- an end stacking area A3 provided beyond the last (as referred to the onward feeding direction A of the positioning element 12) loading device 6, and extending up to the end 5A of the active part of the second conveyor (i.e. that suitable for receiving and handling the products 1 drawn by the devices 6). The end stacking area is engineered in such a way as to be capable of accommodating a plurality of positioning elements 12 loaded with product groups 2. Advantageously are the positioning elements present in the end stacking area queued to each other and/or handled at a constant speed, so as to be capable of continuously feeding the product groups 2 to an inlet conveyor 3 (figure 1) of a packaging machine 30, in particular a machine of the flow pack type or a case packer.

According to the invention, the second conveyor 5, thanks to the end stacking area, where a plurality of positioning elements 12 handled by transport units 8 are present, controllable independently of each other, is suitable for conveying the orderly product groups present in the positioning elements 12 to the conveyor 3 of the packaging machine 30 continuously and at a preset and constant feeding rate coincident with the preset feeding rate of said packaging machine. Advantageously are the positioning elements 12 queued to each other in the end stacking area, so as to simplify the desired continuous conveying step and at a preset rate of the product groups 2 to the packaging machine; however, it is worth emphasizing that such positioning elements, being carried by transport units 8 whose handling is controllable independently of each other, might even be spaced away from each other.

The end stacking area makes it possible to stack complete product groups 2, this way making it possible to compensate for any reductions in the speed of the second conveyor 5 in outputting said product groups, due for instance to a temporary difficulty encountered by the loading devices 6 in creating said product groups (because, for instance, of a different feeding/distribution of the products on the first conveyor 1).

It is worth emphasizing that having called F1 the value for the stream of the product groups 2 input to the conveyor 3 of the packaging machine 30 (i.e. the number of product groups fed by the second conveyor 5 input to the conveyor 3, in the time unit) and Fi the streams of the positioning elements 12 of the second conveyor 5 in the loading areas A1 of the second conveyor 5 (i.e. the number of positioning elements 12 that go through any loading area A1 of the second conveyor, in the time unit), then said streams Fi shall be on average greater than said stream F1 feeding the product groups to the packaging machine 30.

It is worth emphasizing that the presence of an end stacking area, even though preferred, is not essential for the invention, in that a feed that is continuous and at a preset constant speed of the conveyor 3 of a packaging machine, can also be obtained by interposing between the output from the second conveyor 5 and the input to the conveyor 3 of the packaging machine a conventional device suitable for feeding the product groups to the conveyor 3 at the requested constant speed and pace.

On the other hand, providing an end stacking area downstream with respect to the conveyor 5, engineered in such a way as to be able to accommodate a plurality of positioning elements 12 loaded with product groups 2 and/or product groups, in which the positioning elements 12 and/or the product groups 2 present in the end stacking area are queued to each other and/or handled at a constant speed, so as to be able to continuously feed the product groups 2 to an inlet conveyor 3 (figure 1) of a packaging machine 30, in particular a machine of the flow pack type or a caser packer, represents an invention that advantageously could be even embodied in systems that feature an outlet conveyor 5 different from that described so far and/or loading devices and methods 6 and devices and methods for forming the desired product groups 2 different from those described so far.

Figure 5 is a top view of a portion of the system wherein, besides the intermediate stacking areas A2 and the loading areas A1, there are also represented operating areas P1 of the loading devices 6, which represent the surfaces reachable by the members used to draw and handle the products 1, of said devices 6. In the embodiment shown in figure 5 the intermediate stacking areas A2 are more extended than the loading areas A1, i.e. the intermediate stacking areas can accommodate a greater number of positioning elements 12 or of transport units 8 (for instance twice), as referred to those which can be accommodated in the loading areas A1.

Advantageously, (as shown in figure 1) are all intermediate stacking areas A2, and the loading areas A1, arranged one immediately after the other uninterruptedly, so that the end stacking area immediately follows the last loading area. Advantageously are all intermediate stacking areas A2 of equal dimensions, and the same also applies to all loading areas A1. However, if necessary, the initial intermediate stacking area (according to the direction of movement A of the positioning elements 12) might have greater dimensions than the remaining intermediate stacking areas.

The loading devices 6 are of a type that is conventional for those skilled in this matter and will not be described in details below. Such devices, as well known by those skilled in the matter, comprise conventional means 6A for detecting the product to be drawn and means 6B for drawing said product, suitable for transferring it from the first conveyor 4 to the positioning element located in the loading area A1 of its respective loading device.

The detection means 6A used to detect the products to be drawn, schematically represented in figure 1, are preferably placed in the upstream section of the belt 4 and comprise, for instance, a plurality of cameras aligned to each other transversally with respect to the belt, so as to completely cover it by their overall visual field.

The loading devices 6 are controlled and driven by control units 6C which manage each at least one device, and which they are connected to in a manner that is conventional for those skilled in the matter.

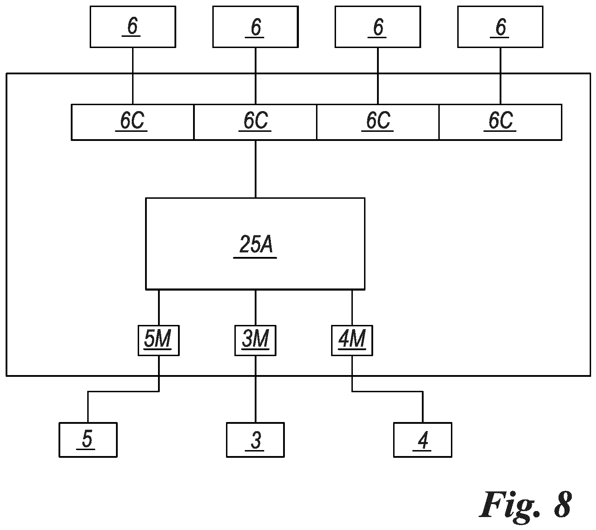

Advantageously is the status of the positioning elements 12 (i.e. the levels and the filling topology of the individual cells of said positioning elements) managed by at least one control unit 25, which might even be the control unit of one of the loading devices 6 or a control unit 25A, different from and external to the control units of said devices (as indicated in figure 8). The set of the control units 6C of the loading devices 6 and of this control unit 25A, if any, used to control the filling status of the positioning elements 12 is schematically referred to herebelow, for the sake of simplicity, as central control unit 25, even if such central control unit is in fact not present in the system.

The remaining component parts of the system, and in particular the transport units 8 of the second conveyor 5, the first conveyor 4 and the outlet handling means 3, also comprise each their own control means, schematically referred to by the reference 5M, 3M and 4M in figure 8 and also schematically grouped together, for the sake of simplicity, into the central control unit 25, even if, in fact, such a central control unit is not present in the system.

As well known to those skilled in this matter, the loading devices 6 comprise means suitable for detecting and sending to the central control unit the position/cell (S1-S4) of the positioning elements 12 where they deposited a product, therefore the control unit, in every instant of the operating cycle of the system, receives and stores a piece of information related to the actual filling status of the cells of all positioning elements present on the second conveyor 5.

Advantageously, the first conveyor 4 and the second conveyor 5 feature onward feeding directions indicated by the arrows B and A respectively (figure 1) parallel but opposite to each other, i.e. the two conveyors operate in a counterflow configuration. However, according to the invention, the two conveyors 4 and 5 might also feature onward feeding directions that are parallel and equal to each other, i.e. they might be arranged in a co-flow configuration.

Figures 4A and 4B show two examples of product groups 2, each product group comprising a plurality of cells C1-C12, i.e. of deposit positions for one individual product, said deposit positions can for instance be receptacles of a tray carried by the positioning elements 12 or might be portions of said positioning elements (identified by the references S1-S3 in figures 2 and 3), the products can be all positioned on one and the same plane (as shown in figure 4B) or be stacked on several levels (as shown in figure 4A). For the sake of simplicity, the product groups will be described herebelow as comprising four cells arranged on two parallel rows, so as to form a square subdivided into four smaller squares, and where every cell is suitable for accommodating one product only.

According to the invention, the method for controlling the loading of the positioning elements 12 in the various loading areas A1 assigns to every loading device 6 a predetermined maximum number of deposits (which might be 0, 1, 2,...) of a product which said device is authorized to make for every positioning element that is located in its loading area.

Furthermore, advantageously the method for controlling the loading of the positioning elements in the various loading areas A1 checks whether the i-th loading device (6i) is in a position to deposit a product, i.e. whether it did not reached yet the predetermined maximum number of deposits for the at least one positioning element 12 present in its own work area. If in the i-th loading area (A1i) of the i-th loading device there are present several positioning elements 12 (or more than one transport unit 8), then the control unit 25 carries-out a check on the positioning element 12 located most downstream, i.e. that closest to the next loading device 6i+1 (as referred to the onward feeding direction A of the second conveyor).

Conversely, if the i-th loading device is in a position to make a deposit, then it actually does it, otherwise it allows the transport unit 8 associated with the positioning element to move to the next stacking area of the next loading device (6i+1) and to queue to the other positioning elements already present in such stacking area, if any. Simultaneously are the transport unit 8 of the positioning elements present in the loading area and in the stacking area of the i-th device fed onward until the positioning element that is most downstream reaches the most downstream point of the i-th loading area.

Just as an example, a criterion to assign the predetermined maximum number of loadings for every loading device is that whereby every device makes the same number of deposits (for instance, in the case of four devices and four cells for every positioning element, every device should deposit one product in every loading area), and if the number of loading devices 6 is not a sub-multiple of the number of the cells S1-S4 of the positioning element 12, then one of the loading devices 8, for instance the last one (according to the onward feeding direction of the second conveyor 5) shall make a lower number of deposits.

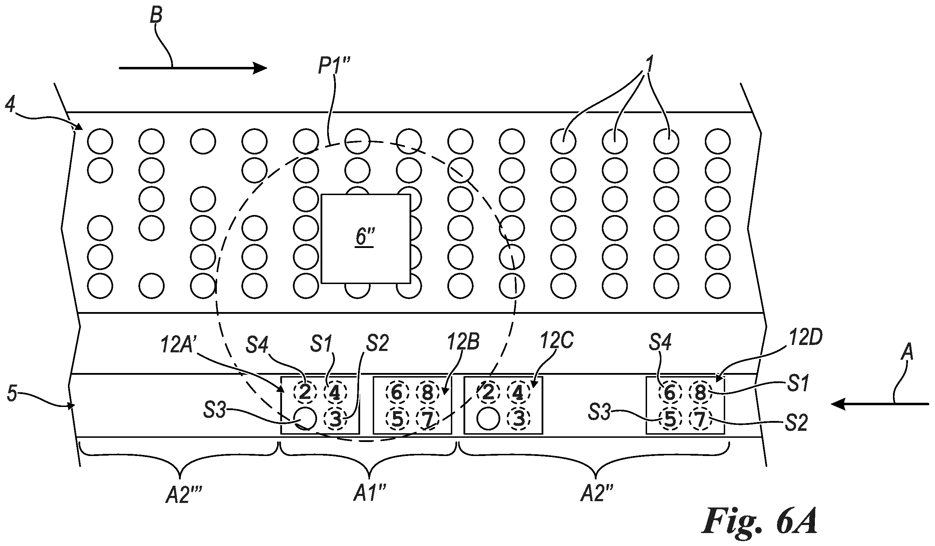

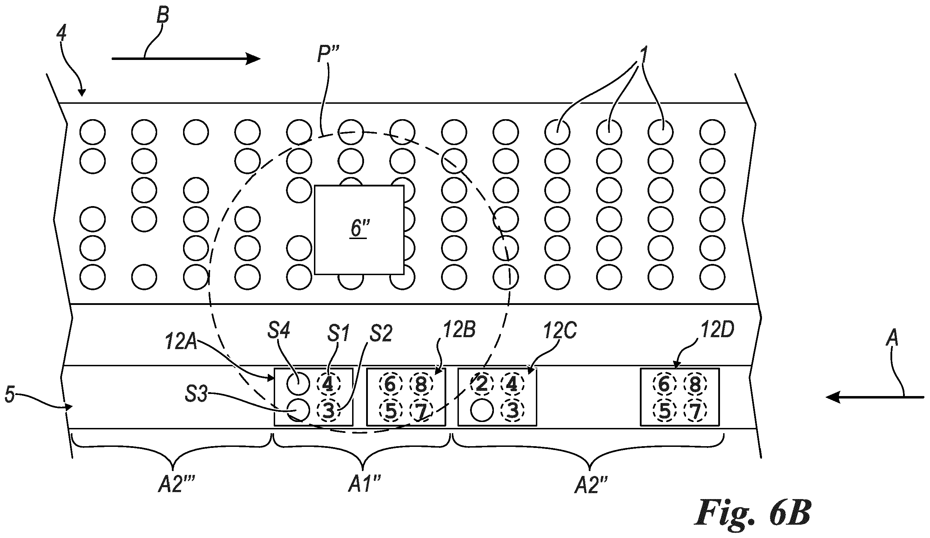

Figures 6A-6D schematically show the method mentioned above. The figures show a portion of the system which comprises a loading device 6" which, for instance, corresponds to the second device in figure 1 (wherein the first device is that drawn on the most right side in figure 1) and a situation whereby one loading only has been assigned to every loading device. Figure 6A shows a situation wherein the device shall load the positioning element 12A' drawn in the most left side in the figure (the most downwards one), which already has one cell S4 with a product loaded therein by a previous loading device 6. The control unit checks whether the device 6" reached the max. number of loadings assigned thereto (for instance one loading), and, if it is found that such condition has not been reached, it draws a product from the conveyor 4 and deposits it in one of the free cells, for instance in the cell S4 (this situation is depicted in figure 6B). The control unit has the information on what cells are free stored in its memory for every positioning element and transfers this information to the device 6", which consequently is in a position to always deposit the drawn product in a free cell.

Having made this deposit, the central control unit automatically stores in its memory that the cell S4 of the positioning element 12A' has also been filled and that such positioning element now has the cells S1 and S2 only still free.

Figure 6B depicts a situation wherein the positioning element 12A' has just been loaded (the cells S3 and S4 being occupied by a product) and in the intermediate stacking area A2" of the device 6" a new positioning element 12D has been queued (by acting onto its respective transport unit 8, not shown in the figure).

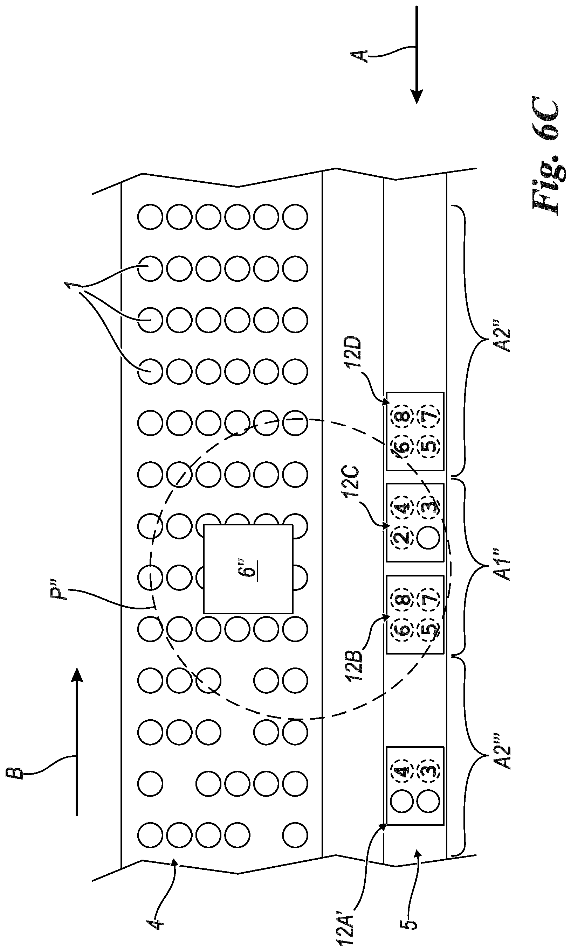

In figure 6C the positioning element 12A' that has just been loaded (the cells S3 and S4 being occupied by a product) has been handled (by acting onto its respective transport unit 8, not shown in the figure) in the stacking area A2"' of the next loading device (not shown in the figure), and the positioning elements 12B, 12C and 12D have been shifted forward (more downstream) by one position. The loading of the positioning element 12B goes on as previously described for the positioning element 12A. According to a first variant of the method described so far, to the loading device not only the maximum number of loadings it can make for a given positioning element present in its work area is assigned, but also, for each of the positioning elements present in its work area, it is also specified in which cell shall these loadings be made. According to this variant the control unit for the i-th control device (12i) first of all performs a check to see whether in the i-th loading area (A1i) of the i-th loading device several positioning elements 12 (i.e. more than one transport unit 8) are present, the control unit performs a check on the positioning element 12 located most downstream, i.e. that closest to the next loading device 6i+1 (as referred to the onward feeding direction A of the second conveyor). On this positioning element located most downstream the control unit checks whether it has a cell assigned to the i-th loading device and, if such check is successful, this device actually perform such a loading; otherwise, it allows the transport unit 8 associated with the positioning element to go on to the next stacking area of the next loading device (6i+1) and to queue to the other positioning elements already present in such stacking area, if any. At the same time, the transport units 8 of the positioning elements present in the loading area and in the stacking area of the i-th device are fed onward until the positioning element located most downwards reaches the lowest point of the i-th loading area.

The logic according to which the cells of the positioning element are assigned to one loading device rather than to another one can be varied as a function of the number of devices, the speed of the system, and the number of cells of the product groups. Just as an example, an equal number of cells of every filling means is sorted to every loading device, for instance with reference to a four-cell positioning element and to a four-loading-device system, the cell s1 is assigned to that loading device which is located most upstream (that shown on the most right side in figure 1), the second S2 to the next loading device, and so on.

The method described above is illustrated herebelow by using figures 6A-6D already described beforehand. As already previously said these figures show a portion of the system which comprises a loading device 6" which, for instance, corresponds to the second device in figure 1 (wherein the first device is that shown on the most right side in figure 1) and a situation wherein to every loading device 6 one loading only has been assigned. Figure 6A shows a situation wherein the device shall load the positioning element 12A' that is shown on the most left side in the figure (the most downstream one), which already has a cell S4 with a product loaded therein by a previous loading device 6 and features cells S1, S2, S4 assigned to the loading devices 4, 3, and 2 respectively (in the figures these assignments have been represented by indicating in their respective cells the number corresponding to the loading device assigned to that cell). The control unit checks whether a cell to fill is assigned (in the case here represented, to the loading device 6" the cell S4 is assigned) and, if the check is successful, then it draws a product from the conveyor 4 and deposits it in the assigned cell S4 (this situation is depicted in figure 6B). The control unit has in its own storage, for each positioning element, the information on which are the cells/loading devices assignments and transfers this information to the device 6", which consequently is in a position to always and only deposit the drawn product in the cell that has been assigned thereto.

The central control unit automatically stores that the cell S4 of the positioning element 12A' has also been filled and that such positioning element has now only cells S1 and S2 still free (and, in the example here represented, assigned) to the next loading devices 4 and 3.

Figure 6B represents the positioning element 12A' that has just been loaded (the cells S3 and S4 being occupied by a product) and in which in the intermediate stacking area A2" of the device 6" a queuing has been made (by acting on its respective transport unit 8, not represented in the figures) of a new positioning element 12D (which, in the example here represented, features the following assignment: cells S1, S2, S3, S4 - devices 8, 7, 5, 6).

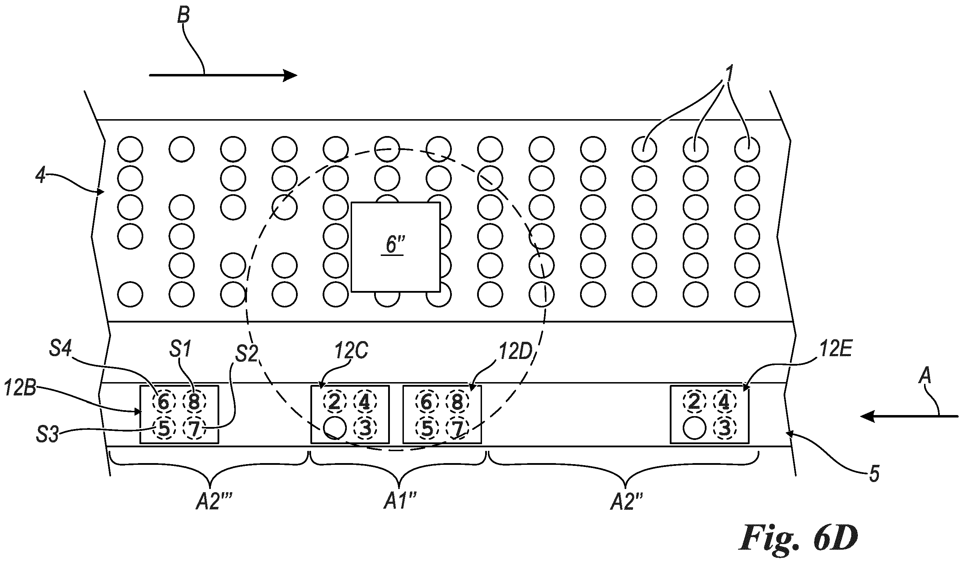

In figure 6C the positioning element 12A' that has been just loaded (the cells S3 and S4 being occupied by a product) has been moved (by acting on its respective transport unit 8 not represented in the figure) to the stacking area A2''' of the next loading device (not represented in the figure), and the positioning elements 12B, 12C and 12D have been shifted onward (more downstream) by one position. The loading of the positioning element 12B goes on as previously described for the positioning element 12A. However, since the positioning element 12B does not comprise cells assigned to the second loading device, but just to the next devices 8, 7, 5, 6, then the control unit feeds the positioning element 12B onward to the next stacking area A2''' and the remaining positioning elements that are queued (including a positioning element 12E in the stacking area A2" of the loading device 6") by one position. At this point, as shown in figure 6D, the positioning element that is located most downstream in the loading area A1" is that identified by the reference 12C, which has the cell S3 already loaded and the following free cells/loading devices assignment: S1, S2, S4 - devices 4, 3, 2. Therefore, the control unit loads the cell S4 assigned to the second device 6".

Advantageously the control method according to the invention has the possibility of modifying the assignment to the loading devices while the system is in operation, therefore, preferably these assignments are not static (i.e. unchangeable in time) but rather dynamic (i.e. variable in time). The modification of these assignments can take place for a number of reasons, as explained below. Preferably, the operation(s) whereby a positioning element 12 is loaded by a loading device 6 shall take place within a predetermined time, i.e. it features a "timeout". This predetermined time equals for instance 10 seconds. With reference to the example depicted in figures 6A-6B, if the loading device 6" is not capable of drawing from the conveyor 4 a product to deposit in the assigned cell S4 of the positioning element 12A' within the preset timeout, then the central control unit of the system makes in any case the positioning element step forward until reaching the next stacking area A2"' and also takes care of assigning the not yet filled cell S4 to a next loading device.

It is worth emphasizing that the control unit might even ignore this check made on the "timeout" if it is not possible to make the positioning element step forward up to the next stacking area, for instance because such stacking area has already been fully occupied by other positioning elements.

Preferably the control method according to the invention also supports an automatic check on the number of positioning elements 12 that are present in the loading area A1 of the loading devices 6. Specifically, if the control unit, on the basis of the data stored about the shifts/positions of the positioning elements 12 (i.e. on their respective transport units 8 that support such positioning elements) finds that an i-th loading area (A1i) remained devoid of a positioning element 12, then it automatically outputs a request for a positioning element for that loading area. Preferably is this request "sent" to the loading device of the immediately preceding work area (6i-1) :
a) if such loading device (6i-1) has loaded the positioning element to be loaded (that located most downstream) within the timeout, then the control unit makes such positioning element step forward up to the next loading area of the device,
b) conversely, if the loading device (6i-1) did not load the positioning element to be loaded (that located most downstream) within the timeout, then the control unit makes in any case this positioning element step forward up to the next loading area of the device, and the control unit re-assigns the cells that have not been loaded by the loading device 6i-1 to the subsequent loading devices (for instance, by equally re-assigning the cells to all subsequent devices or, if the number of the cells to be re-assigned is smaller than the number of the subsequent devices, by starting the re-assignment from the devices that are closest to the devices that did not perform the assigned loading).

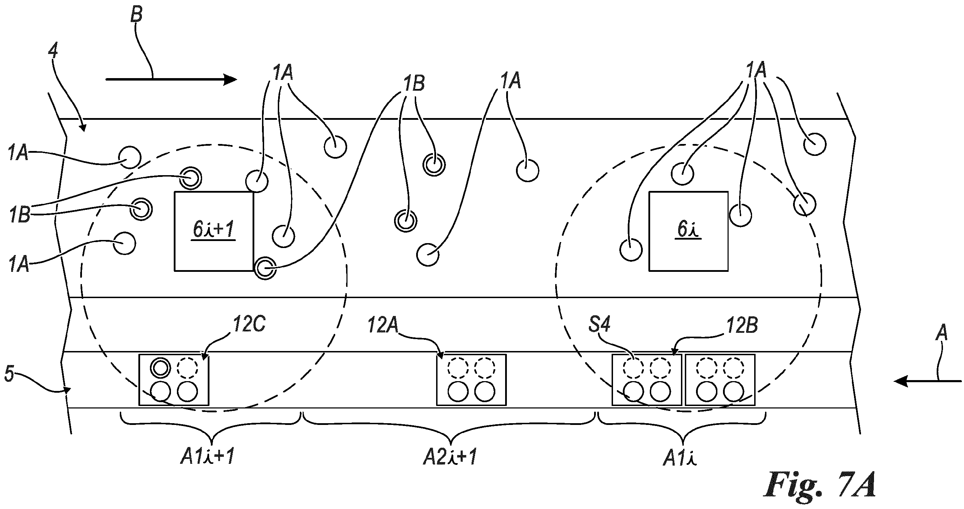

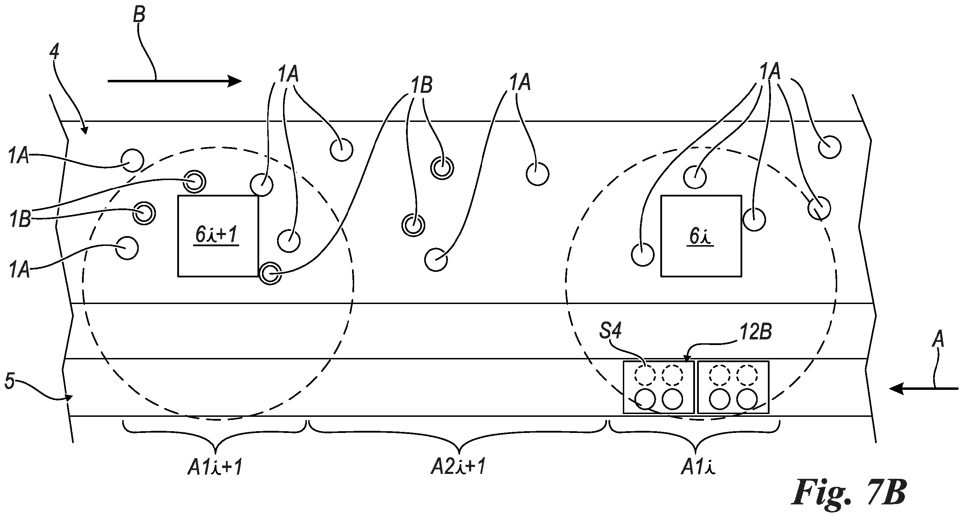

Figures 7A and 7B schematically show the operation described above in a system wherein the loading devices feature, for instance, a timeout equal to 2 seconds and the conveyor 4 transports both products 1A of a first type and products 1B of a second type.

Figure 7A depicts a situation whereby the positioning element 12A is step forward up to the stacking area A2i+1 of the next loading device (6i+1) and the previous loading device (6i) triggers the timer related the loading of the positioning element 12B in which the device shall load a piece of the type 1B in the cell S4. If the device 6i does not find a piece of this type within the maximum preset time (in this example, 2 seconds) and if the next loading device 6i+1 does not require a positioning element (because it has in any case one positioning element 12C to load and a positioning element 12A in its own stacking area A2i+1), then the control unit ignores the "timeout" for the loading device 6i and leaves the positioning element 12B in the same position and tries again to load it.

Figure 7B depicts a situation similar to that depicted in figure 7A, but wherein upon expiration of the timeout preset for the loading of the positioning element 12b by the loading device 6i, the work area A1i+1 of the next loading device 6i+1 is devoid of a positioning element to load, in this event the loading means 12b is shifted to such work area A1i+1 and the cell S4 that had to be loaded by the device 6i is assigned to the next device 6i+1.

If a i-th loading device performed all loadings assigned to the positioning element located most downstream in its own work area, but it is not able to feed it onward because the stacking area A2i+1 of the next loading device is fully occupied by other positioning elements, then the control unit of the system ignores the "timeout" and takes care of performing the assigned loadings also in the remaining positioning elements of the i-th work area, and if the "block" situation lasts, then it re-assigns the number of deposits and/or of the deposit cells for all loading devices of the second conveyor 5 starting from the i-th device up to the end of the conveyor and for all positioning element expected in the loading and stacking areas starting from the i-th loading area on, so as to be capable of performing subsequent further loadings of the positioning elements expected in the i-th work area.

As an alternative to the control mode described above, in the case that it is not possible for a i-th loading device to feed onward the positioning element (s) up to the next loading device, then the control unit of the system sends a request for feeding onward the positioning element present in the work area A1i+1 of the loading device (6i+1) immediately downstream with respect to the work area A1i of the device 6i that is "blocked". If the loading device 6i+1 that receives such request has no space either to feed onward a positioning element of its own, then the control unit sends the same onward feeding request to the next loading device 6i+2 and so on until finding a loading device 6j that "accepts" this request. In this event, through the control unit of the system a request is sent for making the handling groups step forward for the loading device j, as described with reference to figure 7B, even if in the loading area A1j of such loading device 6j there are still present positioning elements 12 to load.

Preferably, when they are not to be loaded by a loading device 6, the transport units 8 that comprise the positioning element 12 shift onto the second conveyor 5 with such an acceleration/deceleration as not to cause the products transported by said positioning element 12 to be decomposed or damaged, for instance at a speed less than or equal to 5m/s. Advantageously, when a positioning element enters the loading area of a loading device that a loading has been assigned to on said positioning element, the control unit of the system slows down or even completely stops the transport unit that comprises such positioning element, so as to make it possible for the loading device to perform a quick and accurate deposit.

It is worth emphasizing that according to the invention the control unit of the system, by storing the positions of the transport units 8, and consequently of the positioning elements 12, and the positions of the products deposited in said positioning elements, and assigning the loadings that the devices 6 are capable of performing on said positioning elements and also storing said positioning elements and also storing said loadings made, is:
- in a position to reliably and accurately check the loading of said positioning elements;
- and to simultaneously assure that a continuous stream of product groups is always the output to the conveyor 5, the value of such stream being predetermined and substantial equal to the feeding stream of the packaging machine 30 installed downstream with respect to said output from the conveyor 5.

Let's finally point out that the embodiment illustrated so far has been described for merely explanatory purposes and that numerous variants are possible, all of them belonging to the same inventive concept, for instance the transport units, and consequently the positioning elements too can be handled along the conveyor 5 in the same direction as the predominant handling direction A of the conveyor as well as in the direction opposite to said predominant direction, i.e. they can be fed onward but can also be made move back.

## Claims

1. A method for grouping individual products 1 in product groups 2 and for feeding said product groups 2 to handling means 3, particularly handling means 3 for feeding said product groups to a packaging machine 30, for example a "flow pack" or case packers or the like, said system comprising the following steps:
- feeding through at least one first conveyor 4 a plurality of products 1, distributed over said first conveyor,
- handling said product groups 2 through a second conveyor 5, comprising a linear motor including a stator 7 and a plurality of movers 8, moving independently from one another, along the stator, and comprising each at least one positioning element 12 suitable to support said product groups 2,
- drawing through a plurality of loading devices 6 at least one individual product at a time from the first conveyor 4 and depositing it in said positioning elements 12,
- wherein said positioning elements 12 provide each a plurality of preset deposit positions (S1-S4) wherein said loading devices deposit said individual products 1;
**characterised in that**:
- each loading device 6 is assigned a preset maximum number of deposits of a product which said device is authorised to make for each positioning element situated in a loading area of said device,
- for each deposit accomplished by the loading devices, the deposit position (S1-S4) of the positioning element wherein said deposit has been made is stored into memory,
- the position of said transport units 8 during their handling at least along one portion 7A of the stator 7 is detected and stored into memory.

2. A method according to one of the preceding claims, **characterised in that** it provides in the second conveyor
- a plurality of loading areas A1 of the positioning elements 12,
- a plurality of intermediate stacking areas A2 provided between one loading area and the next,
- and an end stacking area A3 following the last loading area,
- wherein for each loading device 6 a loading area reserved to loading at least one of the positioning elements is provided,
- wherein the intermediate stacking areas are sized in such a way as to allow at least one positioning element coming from the preceding loading area to transit and/or to pause before it reaches the following loading area,
- and **in that** said positioning elements are handled and loaded in such a way that in the end stacking area a plurality of loaded positioning elements is always provided, said loaded positioning elements being suitable to feed continuously a packaging machine 30, particularly a flow-pack machine.

3. A method according to one of the preceding claims, **characterised in that** the positioning elements are handled in the end stacking area in such a way that the loaded positioning elements are queued one after another and/or are moved at a constant rate.

4. A method according to one of the preceding claims, characterised the loaded positioning elements are moved in the end stacking area in such a way that at the outlet of conveyor 5 a continuous stream of product groups 2 is always available, said stream having a preset value and being substantially equal to the feeding stream of the packaging machine 30 downstream of said outlet of the conveyor 5.

5. A method according to one of the preceding claims, **characterised in that** each loading device 6 is assigned for each of the positioning elements 12 present in a loading area A1 of said loading devices 6 also at least one of the preset positions S1-S4 of said positioning elements wherein said loading device may deposit the drawn product.

6. A method according to one of the preceding claims, **characterised in that** the assignments of a preset maximum number of deposits of a product which a loading device is authorized to make for each positioning element situated in a loading area of said device, can be changed during product grouping operations.

7. A method according to one of the preceding claims, **characterised in that** a maximum time is assigned whereby said loading devices 6 must draw and deposit a product in a positioning element 12 and that the assignments are changed after said maximum time has elapsed and said device has failed to draw and deposit, the unaccomplished loading being assigned to a loading device following the one which failed to load by the preset time and the positioning element wherein the deposit could not be made by the preset time being fed onward toward said following device.

8. A method according to one of the preceding claims, **characterised in that** it checks whether a positioning element which has been loaded with the preset number of loadings can be fed onward from a loading device toward a following loading device and that it changes the loading assignments if said feed is not possible and/or it changes the maximum loading time of said loading devices.

9. A method according to one of the preceding claims, **characterised in that** it provides an automatic control on the number of positioning elements 12 present in a loading area A1 of the loading devices 6 or in a stacking area preceding said loading area, it checks whether an i-th loading area (A1i) of a positioning element which follows the one wherein said automatic control has been performed is without positioning elements 12 and whether no positioning elements are present in the i-th stacking area (A2i) associated to said i-th loading area and, in the event of a positive check, it feeds a positioning element towards said i-th loading area from a preceding loading area.

10. A method according to one of the preceding claims, **characterised in that**, after a loading device has performed the assigned loading of a positioning element, it is checked whether said positioning element can be fed towards a following loading device and that, if said check is negative, the first following loading device which can accept a positioning element in one of its loading areas is searched for and a positioning element is sent to said first following device, also feeding onward all the positioning elements starting from the one which could not be fed onward.

11. A method according to one of the preceding claims, **characterised in that** the loading devices 6 deposit the products in a positioning element provided in a loading area A1 of said loading devices until said device has reached the preset maximum number of assigned deposits and/or the time assigned for said deposits, and that, if a plurality of positioning elements 12 are present in said loading area, they perform said deposits starting from the positioning element 12 which is closest to the following loading device.

12. A system for grouping individual products 1 in product groups 2 and for feeding said product groups 2 to handling means 3, particularly handling means 3 for feeding said product groups 2 to a packaging machine 30, for example a "flow pack" or case packer or the like, said system comprising:
- at least one first conveyor 4 for handling at the inlet of the system a plurality of products 1, distributed over said first conveyor,
- at least one second conveyor 5 for handling at the outlet of the system said product groups 2, said second conveyor 5 comprising a linear motor including a stator 7 and a plurality of movers 8, moving independently from one another, along the stator, and comprising each at least one positioning element 12 suitable to support said product groups 2,
- a plurality of loading devices 6 suitable to draw at least one individual product at a time from the first conveyor 4 and depositing it in said positioning elements 12 of the second conveyor,
- wherein said positioning elements 12 provide each a plurality of preset deposit positions (S1-S4) wherein said loading devices deposit said individual products 1;
**characterised in that** it comprises:
- at least one control unit 25 suitable to assign to each loading device 6 a preset maximum number of deposits of a product which said device is authorised to make for each positioning element situated in a loading area of said device,
- wherein said at least one control unit 25 stores into memory, for each deposit accomplished by the loading devices, the deposit position (S1-S4) of the positioning element wherein said deposit has been made,
- wherein said at least one control unit 25 detects and stores into memory the position of said transport units 8 during their handling at least along one portion 7A of the stator 7.

13. A system according to claim 12, **characterised in that** it provides in the second conveyor 5
- a plurality of loading areas A1 of the positioning elements 12,
- a plurality of intermediate stacking areas A2 provided between one loading area and the next,
- and an end stacking area A3 following the last loading area,
- wherein for each loading device 6 a loading area reserved to loading at least one of the positioning elements is provided,
- wherein the intermediate stacking areas are sized in such a way as to allow at least one positioning element 12 coming from the preceding loading area to transit and/or to pause before it reaches the following loading area,
- and **in that** the at least one control unit 25 of the system moves and loads said positioning elements 12 in such a way that in the end stacking area a plurality of loaded positioning elements is always provided, suitable to feed continuously a packaging machine 30, particularly a flow-pack machine.

14. A system according to one of the preceding claims, **characterised in that** the at least one control unit 25 of the system checks for the moving of the positioning elements 12 in the end stacking area A3 in such a way that said positioning elements 12 are queued one after another and/or are moved at a constant rate.

15. A system according to one of the preceding claims, **characterised in that** the at least one control unit 25 of the system checks for the moving of the positioning elements in the end stacking area A3 in such a way that at the outlet of conveyor 5 a continuous stream of product groups 2 is always available, said stream having a preset value and being substantially equal to the feeding stream of the packaging machine 30 downstream of said outlet of the conveyor 5.

16. A system according to one of the preceding claims, **characterised in that** the at least one control unit 25 assigns to each loading device 6 for each of the positioning elements 12 present in a loading area A1 of said loading devices 6 also the preset position S1-S4 of said positioning elements 12 wherein said device may deposit the drawn product.

17. A system according to one of the preceding claims, **characterised in that** the at least one control unit 25 during product grouping operations changes the assignments to each loading device 6 of the preset maximum number of deposits of a product which said device is authorised to make for each positioning element 12 situated in a loading area of said device.

18. A system according to one of the preceding claims, **characterised in that** the at least one control unit 25 assigns a maximum time whereby the loading devices 6 must draw and deposit a product in a positioning element 12 and that said control unit changes the assignments to each loading device 6 of the preset maximum number of deposits of a product which said device is authorised to make for each positioning element 12 situated in a loading area of said device, after said maximum time has elapsed and said device has failed to draw and deposit, and that said at least one control unit 25 assigns the unaccomplished loading to a loading device following the one which failed to load by the preset time and feeds the positioning element wherein the deposit could not be made by the preset time onward toward said following device.

19. A system according to one of the preceding claims, **characterised in that** the at least one control unit 25 checks whether a positioning element 12 which was loaded with the preset number of loadings can be fed from a loading device towards a following loading device and changes the loading assignments if said feed is not possible and/or changes the maximum loading time assigned to said loading devices.

20. A system according to one of the preceding claims, **characterised in that** the at least one control unit 25 of the system, for each loading device, detects the number of positioning elements 12 present in a loading area A1 of the loading devices 6 or in a stacking area preceding said loading area and checks whether an i-th loading area (A1i) is without positioning elements 12 and whether no positioning elements are present in the relevant i-th stacking area (A2i) and that said at least one control unit 25, in the event of a positive check, feeds a positioning element towards said i-th loading area from a preceding loading area.

21. A system according to one of the preceding claims, **characterised in that** the at least one control unit 25 of the system, after a loading device 6 has performed the assigned loading of a positioning element 12, checks whether said positioning element 12 can be fed towards a following loading device 6 and, if said check is negative, said at least one control unit 25 searches for the first following loading device 6 which can accept a positioning element 12 in one of its loading areas A1, and that said control unit sends a positioning element 12 to said first following loading device 6, also feeding onward all the positioning elements 12 starting from the one which could not be fed onward.

22. A system according to one of the preceding claims, **characterised in that** the control unit 25 of the system allows the loading devices 6 to deposit the products in a positioning element 12 provided in a loading area A1 of said loading devices 6 until said device has reached the preset maximum number of assigned deposits and/or the time assigned for said deposits, and that, if a plurality of positioning elements 12 are present in said loading area A1, the control unit 25 checks said loading devices 6 so that they make said deposits starting from the positioning element 12 which is closest to the following loading device.

## Patentansprüche

1. Verfahren zur Gruppierung von Einzelprodukten 1 in Produktgruppen 2 und zum Zuführen dieser Produktgruppen 2 zu Handhabungsmitteln 3, insbesondere zu Handhabungsmitteln 3 zum Zuführen der genannten Produktgruppen zu einer Verpackungsmaschine 30 wie zum Beispiel zu einer Flowpack-Maschine oder einem Kartonpacker oder dergleichen, wobei das genannte System die folgenden Schritte umfasst:
- Zufuhren durch mindestens einen ersten Förderer 4 einer Vielzahl von über den genannten ersten Förderer verteilten Produkten 1,
- Handhaben der genannten Produktgruppen 2 durch einen zweiten Förderer 5, umfassend einen Linearmotor einschließend eines Stators 7 sowie einer Mehrzahl von Läufern 8, die sich des Stators entlang unabhängig voneinander bewegen, wobei jeder davon mindestens ein Positionierungselement 12 hat, das sich eignet, die genannten Produktgruppen 2 zu unterstützen,
- Entnehmen durch eine Vielzahl von Ladeeinrichtungen 6 mindestens eines Einzelprodukts stückweise von dem ersten Förderer 4, und Ablegen desselben in den genannten Positionierungselemente 12,
- worin jedes von den genannten Positionierungselementen 12 eine Vielzahl von vorgegebenen Ablagepositionen (S1-S4), worin die genannten Ladeeinrichtungen die genannten Einzelprodukte 1 ablegen; **dadurch gekennzeichnet, dass**:
- jedem Ladeeinrichtung 6 eine vorgegebene Höchstzahl von Ablagen eines Produkts zugeordnet wird, die die genannte Einrichtung für jedes Positionierungselement in einer Ladefläche der genannten Einrichtung durchführen darf,
- für jede von den Ladeeinrichtungen durchgeführten Ablagen die Ablageposition (S1-S4) des Positionierungselements, worin die genannte Ablage durchgeführt worden ist, gespeichert wird,
- die Position der genannten Transporteinheiten 8 während der Handhabung davon längs mindestens einer Portion 7A des Stators 7 erfasst und gespeichert wird.

2. Verfahren nach einem der vorhergehenden Ansprüche, **dadurch gekennzeichnet, dass** es in dem zweiten Förderer das folgende voraussieht
- eine Vielzahl von Ladeflächen A1 der Positionierungselemente 12,
- eine Vielzahl von zwischenliegenden Stapelflächen A2 zwischen einer Ladefläche und der folgenden,
- und eine Endstapelfläche A3 nach der letzten Ladefläche,
- worin für jede Ladeeinrichtung 6 eine Ladefläche zum Laden von mindestens einem der Positionierungselement vorhanden ist,
- worin die zwischenliegenden Stapelflächen eine solche Größe haben, dass mindestens ein Positionierungselement aus dem vorhergehenden Ladefläche durchfahren und/oder vor dem Erreichen der folgenden Ladefläche halten kann,
- und dass die genannten Positionierungselemente derart gehandhabt und geladen sind, dass in der Endstapelfläche eine Vielzahl von geladenen Positionierungselementen immer vorhanden sind, wobei die genannten geladenen Positionierungselemente geeignet sind, eine Verpackungsmaschine 30, insbesondere eine Flowpack-Maschine, kontinuierlich zu beaufschlagen.

3. Verfahren nach einem der vorhergehenden Ansprüche, **dadurch gekennzeichnet, dass** die Positionierungselemente in der Endstapelfläche derart gehandhabt sind, dass die geladenen Positionierungselemente nacheinander angestellt und/oder mit konstanter Geschwindigkeit bewegt werden.

4. Verfahren nach einem der vorhergehenden Ansprüche, **dadurch gekennzeichnet, dass** die geladenen Positionierungselemente zur Endstapelfläche derart bewegt werden, dass ein ständiger Fluss von Produktgruppen 2 am Auslass des Förderers 5 immer vorhanden ist, wobei der genannte Fluss einen vorgegebenen Wert hat und dem dem genannten Auslass des Förderers 5 nachgelagerten Zufluss der Verpackungsmaschine 30 entspricht.

5. Verfahren nach einem der vorhergehenden Ansprüche, **dadurch gekennzeichnet, dass** jeder Ladeeinrichtung 6 für jedes in einer Ladefläche A1 der genannten Ladeeinrichtungen 6 vorhandene Positionierungselement 12 auch mindestens eine der vorgegebenen Positionen S1-S4 der genannten Positionierungselemente zugeordnet wird, worin die genannte Einrichtung das entnommene Produkt ablegen kann.

6. Verfahren nach einem der vorhergehenden Ansprüche, **dadurch gekennzeichnet, dass** die Zuordnungen einer vorgegebenen Höchstzahl von Ablagen eines Produkts, die eine Ladeeinrichtung für jedes in einer Ladefläche der genannten Einrichtung angeordneten Positionierungselement durchführen darf, bei der Produktgruppierung verändert werden können.

7. Verfahren nach einem der vorhergehenden Ansprüche, **dadurch gekennzeichnet, dass** eine Höchstzeit zugeordnet wird, vor der die genannten Ladeeinrichtungen 6 ein Produkt entnehmen und in einem Positionierungselement 12 ablegen sollen, und dass die Zuordnungen verändert werden, nachdem die genannte Höchstzeit vergangen ist und die genannte Einrichtung die Entnahme und Ablage nicht getan hat, wobei die unerfüllte Ladung einer Ladeeinrichtung zugeordnet ist, die nach der Einrichtung, die das Positionierungselement innerhalb der vorgegebenen Zeit nicht durchgeführt hat, liegt und wobei das Positionierungselement, wo die Ablage innerhalb der vorgegebenen Zeit nicht durchgeführt werden konnte, gegen die genannte folgende Einrichtung weiter zugeführt wird.

8. Verfahren nach einem der vorhergehenden Ansprüche, **dadurch gekennzeichnet, dass** es überprüft, ob ein mit der vorgegebenen Zahl von Ladungen geladenes Positionierungselement von einer Ladeeinrichtung gegen eine folgende Ladeeinrichtung weiter zugeführt werden kann, und dass es die Ladungszuordnungen verändert, wenn die genannte Zuführung nicht möglich ist, und/oder es die Ladungshöchstzeit der genannten Ladeeinrichtungen verändert.

9. Verfahren nach einem der vorhergehenden Ansprüche, **dadurch gekennzeichnet, dass** es die automatische Kontrolle der Zahl von in einer Ladefläche A1 der Ladeeinrichtungen 6 oder in einer Stapelfläche vor der genannten Ladefläche vorhandenen Positionierungselementen 12 voraussieht, dass es überprüft, ob eine i-te Ladefläche (A1i) eines Positionierungselements nach dem, worin die genannte automatische Kontrolle durchgeführt worden ist, ohne Positionierungselemente 12 ist, und ob kein Positionierungselement in der mit der genannten i-ten Ladefläche angeschlossenen i-ten Stapelfläche (A2i) vorhanden ist und, wenn die Überprüfung positiv ist, es ein Positionierungselement aus einer vorhergehenden Ladefläche gegen die genannte i-te Ladefläche zuführt.

10. Verfahren nach einem der vorhergehenden Ansprüche, **dadurch gekennzeichnet, dass**, nachdem eine Ladeeinrichtung die zugeordnete Ladung eines Positionierungselements durchgeführt hat, es überprüft, ob das genannte Positionierungselement gegen eine folgende Ladeeinrichtung durchgeführt werden kann, und dass, wenn die Überprüfung negativ ist, die erste Ladeeinrichtung, die ein Positionierungselement in einer von ihren Ladeflächen aufnehmen kann, gesucht wird und ein Positionierungselement zu der genannten ersten folgenden Einrichtung geleitet wird, wobei alle Positionierungselemente ausgehend von dem, das nicht weiter zugeführt werden konnte, auch weiter zugeführt werden.

11. Verfahren nach einem der vorhergehenden Ansprüche, **dadurch gekennzeichnet, dass** die Ladeeinrichtungen 6 die Produkte in einem in einer Ladefläche A1 der genannten Ladeeinrichtungen vorhandenen Positionierungselement ablegen, bis dass die genannte Einrichtung die vorgegebene Höchstzahl von zugeordneten Ablagen und/oder die für die genannten Ablagen zugeordnete Zeit erreicht hat, und dass, wenn eine Vielzahl von Positionierungselementen 12 in der genannten Ladefläche vorhanden sind, sie die genannten Ablegen ausgehend von dem dem folgenden Ladeeinrichtung am nächsten stehenden Positionierungselement 12 durchführen.

12. System zur Gruppierung von Einzelprodukten 1 in Produktgruppen 2 und zum Zuführen dieser Produktgruppen 2 zu Handhabungsmitteln 3, insbesondere zu Handhabungsmitteln 3 zum Zuführen der genannten Produktgruppen zu einer Verpackungsmaschine 30 wie zum Beispiel zu einer Flowpack-Maschine oder einem Kartonpacker oder dergleichen, wobei das genannte System umfasst:
- mindestens einen ersten Förderer 4 zum Zuführen am Einlass des Systems einer Vielzahl von über den genannten ersten Förderer verteilten Produkten 1,
- mindestens einen zweiten Förderer 5 zum Handhaben am Auslass des Systems der genannten Produktgruppen 2, wobei der genannte zweite Förderer 5 einen Linearmotor umfasst, einschließend eines Stators 7 sowie einer Mehrzahl von Läufern 8, die sich des Stators entlang unabhängig voneinander bewegen, wobei jeder davon mindestens ein Positionierungselement 12 hat, das sich eignet, die genannten Produktgruppen 2 zu unterstützen,
- eine Vielzahl von Ladeeinrichtungen 6, die sich eignen, mindestens ein Einzelprodukt stückweise von dem ersten Förderer 4 zu entnehmen und dasselbe in den genannten Positionierungselemente 12 des zweiten Förderers abzulegen,
- worin jedes von den genannten Positionierungselementen 12 eine Vielzahl von vorgegebenen Ablagepositionen (S1-S4), worin die genannten Ladeeinrichtungen die genannten Einzelprodukte 1 ablegen; **dadurch gekennzeichnet, dass** es umfasst:
- mindestens eine Steuereinheit 25, die sich eignet, jeder Ladeeinrichtung 6 eine vorgegebene Höchstzahl von Ablagen eines Produkts zuzuordnen, die die genannte Einrichtung für jedes Positionierungselement in einer Ladefläche der genannten Einrichtung durchführen darf,
- worin die genannte mindestens eine Steuereinheit 25 für jede von den Ladeeinrichtungen durchgeführten Ablagen die Ablageposition (S1-S4) des Positionierungselements, worin die genannte Ablage durchgeführt worden ist, speichert,
- worin die genannte mindestens eine Steuereinheit 25 die Position der genannten Transporteinheiten 8 während der Handhabung davon längs mindestens einer Portion 7A des Stators 7 erfasst und speichert.

13. System nach Anspruch 12, **dadurch gekennzeichnet, dass** es in dem zweiten Förderer 5 das folgende voraussieht:
- eine Vielzahl von Ladeflächen A1 der Positionierungselemente 12,
- eine Vielzahl von zwischenliegenden Stapelflächen A2 zwischen einer Ladefläche und der folgenden,
- und eine Endstapelfläche A3 nach der letzten Ladefläche,
- worin für jede Ladeeinrichtung 6 eine Ladefläche zum Laden von mindestens einem der Positionierungselement vorhanden ist,
- worin die zwischenliegenden Stapelflächen eine solche Größe haben, dass mindestens ein Positionierungselement 12 aus dem vorhergehenden Ladefläche durchfahren und/oder vor dem Erreichen der folgenden Ladefläche halten kann,
- und dass die mindestens eine Steuereinheit 25 des Systems die genannten Positionierungselemente 12 derart bewegt und lädt, dass in der Endstapelfläche eine Vielzahl von geladenen Positionierungselementen immer vorhanden sind, die geeignet sind, eine Verpackungsmaschine 30, insbesondere eine Flowpack-Maschine, kontinuierlich zu beaufschlagen.

14. System nach einem der vorhergehenden Ansprüche, **dadurch gekennzeichnet, dass** die mindestens eine Steuereinheit 25 des Systems die Bewegung der Positionierungselemente 12 in der Endstapelfläche A3 derart überprüft, dass die genannten Positionierungselemente 12 nacheinander angestellt und/oder mit konstanter Geschwindigkeit bewegt werden.

15. System nach einem der vorhergehenden Ansprüche, **dadurch gekennzeichnet, dass** die mindestens eine Steuereinheit 25 des Systems die Bewegung der Positionierungselemente 12 in der Endstapelfläche A3 derart überprüft, dass ein ständiger Fluss von Produktgruppen 2 am Auslass des Förderers 5 immer vorhanden ist, wobei der genannte Fluss einen vorgegebenen Wert hat und dem dem genannten Auslass des Förderers 5 nachgelagerten Zufluss der Verpackungsmaschine 30 entspricht.

16. System nach einem der vorhergehenden Ansprüche, **dadurch gekennzeichnet, dass** die mindestens eine Steuereinheit 25 jeder Ladeeinrichtung 6 für jedes in einer Ladefläche A1 der genannten Ladeeinrichtungen 6 vorhandene Positionierungselement 12 auch mindestens eine der vorgegebenen Positionen S1-S4 der genannten Positionierungselemente zuordnet, worin die genannte Einrichtung das entnommene Produkt ablegen kann.

17. System nach einem der vorhergehenden Ansprüche, **dadurch gekennzeichnet, dass** die mindestens eine Steuereinheit 25 die Zuordnungen der vorgegebenen Höchstzahl von Ablagen eines Produkts, die jede Ladeeinrichtung 6 für jedes in einer Ladefläche der genannten Einrichtung angeordneten Positionierungselement 12 durchführen darf, bei der Produktgruppierung verändert.

18. System nach einem der vorhergehenden Ansprüche, **dadurch gekennzeichnet, dass** die mindestens eine Steuereinheit 25 eine Höchstzeit zuordnet, vor der die Ladeeinrichtungen 6 ein Produkt entnehmen und in einem Positionierungselement 12 ablegen sollen, und dass die genannte Steuereinheit die Zuordnungen der vorgegebenen Höchstzahl von Ablagen eines Produkts, die jede Ladeeinrichtung 6 für jedes in einer Ladefläche der genannten Einrichtung angeordneten Positionierungselement 12 durchführen darf, verändert, nachdem die genannte Höchstzeit vergangen ist und die genannte Einrichtung die Entnahme und Ablage nicht getan hat, und dass die genannte mindestens eine Steuereinheit 25 die unerfüllte Ladung einer Ladeeinrichtung zuordnet, die nach der Einrichtung, die das Positionierungselement innerhalb der vorgegebenen Zeit nicht durchgeführt hat, liegt, und dass die Steuereinheit das Positionierungselement, wo die Ablage innerhalb der vorgegebenen Zeit nicht durchgeführt werden konnte, gegen die genannte folgende Einrichtung weiter zuführt.

19. System nach einem der vorhergehenden Ansprüche, **dadurch gekennzeichnet, dass** die mindestens eine Steuereinheit 25 überprüft, ob ein mit der vorgegebenen Zahl von Ladungen geladenes Positionierungselement 12 von einer Ladeeinrichtung gegen eine folgende Ladeeinrichtung weiter zugeführt werden kann, und dass sie die Ladungszuordnungen verändert, wenn die genannte Zuführung nicht möglich ist, und/oder es die Ladungshöchstzeit der genannten Ladeeinrichtungen verändert.

20. System nach einem der vorhergehenden Ansprüche, **dadurch gekennzeichnet, dass** die mindestens eine Steuereinheit 25 des Systems für jede Ladeeinrichtung die Zahl von in einer Ladefläche A1 der Ladeeinrichtungen 6 oder in einer Stapelfläche vor der genannten Ladefläche vorhandenen Positionierungselementen 12 erfasst und sie überprüft, ob eine i-te Ladefläche (A1i) ohne Positionierungselemente 12 ist, und ob kein Positionierungselement in der entsprechenden i-ten Stapelfläche (A2i) vorhanden ist und dass, wenn die Überprüfung positiv ist, die genannte mindestens eine Steuereinheit 25 ein Positionierungselement aus einer vorhergehenden Ladefläche gegen die genannte i-te Ladefläche zuführt.

21. System nach einem der vorhergehenden Ansprüche, **dadurch gekennzeichnet, dass**, nachdem eine Ladeeinrichtung 6 die zugeordnete Ladung eines Positionierungselements 12 durchgeführt hat, die mindestens eine Steuereinheit 25 des Systems überprüft, ob das genannte Positionierungselement 12 gegen eine folgende Ladeeinrichtung durchgeführt werden kann, und, wenn die Überprüfung negativ ist, die genannte mindestens eine Steuereinheit 25 die erste Ladeeinrichtung 6, die ein Positionierungselement 12 in einer von ihren Ladeflächen A1 aufnehmen kann, sucht, und dass die genannte Steuereinheit ein Positionierungselement 12 zu der genannten ersten folgenden Ladeeinrichtung 6 leitet, wobei alle Positionierungselemente 12 ausgehend von dem, das nicht weiter zugeführt werden konnte, auch weiter zugeführt werden.

22. System nach einem der vorhergehenden Ansprüche, **dadurch gekennzeichnet, dass** die Steuereinheit 25 des Systems den Ladeeinrichtungen 6 erlaubt, die Produkte in einem in einer Ladefläche A1 der genannten Ladeeinrichtungen 6 vorhandenen Positionierungselement abzulegen, bis dass die genannte Einrichtung die vorgegebene Höchstzahl von zugeordneten Ablagen und/oder die für die genannten Ablagen zugeordnete Zeit erreicht hat, und dass, wenn eine Vielzahl von Positionierungselementen 12 in der genannten Ladefläche A1 vorhanden sind, die Steuereinheit 25 derart überprüft die genannten Ladeeinrichtungen 6, dass sie die genannten Ablegen ausgehend von dem dem folgenden Ladeeinrichtung am nächsten stehenden Positionierungselement 12 durchführen.

## Revendications

1. Procédé pour grouper des produits individuels 1 dans des groupes de produits 2 et pour alimenter ces groupes de produits 2 à des moyens de mise en mouvement 3, en particulier des moyens de mise en mouvement 3 pour alimenter lesdits groupes de produits à une machine d'emballage 30, par exemple de type « sac thermosoudé » ou garniture d'étanchéité d'encaissage ou similaire, comprenant les passages suivants :
- alimenter à travers au moins un premier transporteur 4 une pluralité de produits 1 distribués sur ledit premier transporteur,
- mettre en mouvement lesdits groupes de produits 2 à travers un second transporteur 5, comprenant un moteur linéaire incluant un stator 7 et une pluralité d'unités de transport 8, qui se déplacent indépendamment l'une de l'autre, le long du stator, chacune d'elles comprenant au moins un élément de positionnement 12 propre à soutenir lesdits groupes de produits 2,
- prélever moyennant une pluralité de dispositifs de chargement 6 au moins un produit individuel à la fois du premier transporteur 4 et le déposer dans lesdits éléments de positionnement 12,
- où chacun desdits éléments de positionnement 12 prévoit une pluralité de positions de dépôt préétablies (S1-S4) où lesdits dispositifs de chargement déposent lesdits produits individuels 1;
**caractérisé en ce que** :
- à chaque dispositif de chargement 6 est attribué un nombre maximal préétabli de dépôts d'un produit que ledit dispositif est autorisé à accomplir pour chaque élément de positionnement situé dans une zone de chargement dudit dispositif,
- pour chaque dépôt accompli par les dispositifs de chargement, la position de dépôt (S1-S4) de l'élément de positionnement où ledit dépôt a été accompli est enregistrée en mémoire,
- la position desdites unités de transport 8 pendant leur mise en mouvement au moins le long d'une portion 7A du stator 7 est détectée et enregistrée en mémoire.

2. Procédé selon l'une des revendications précédentes, **caractérisé en ce qu'**il prévoit dans le second transporteur
- une pluralité de zones de chargement A1 des éléments de positionnement 12,
- une pluralité de zones d'empilage intermédiaires A2 prévues entre une zone de chargement et la suivante,
- et une zone d'empilage finale A3 après la dernière zone de chargement,
- où pour chaque dispositif de chargement 6 est prévue une zone de chargement réservée au chargement d'au moins un des éléments de positionnement,
- où les zones d'empilage intermédiaires ont des dimensions telles qu'elles permettent à au moins un élément de positionnement venant de la zone de chargement précédente de transiter et/ou de s'arrêter avant de passer à la zone de chargement suivante,
- et **en ce que** lesdits éléments de positionnement sont mis en mouvement et chargés de sorte que dans la zone d'empilage finale une pluralité d'éléments de positionnement chargés sont toujours disponibles, lesdits éléments de positionnement étant propes à alimenter de façon continue une machine d'emballage 30, en particulier une machine de type « sac thermosoudé ».

3. Procédé selon l'une des revendications précédentes, **caractérisé en ce que** les éléments de positionnement sont mis en mouvement dans la zone d'empilage finale de sorte que les éléments de positionnement chargés sont mis en attente l'un après l'autre et/ou sont déplacés à une vitesse constante.

4. Procédé selon l'une des revendications précédentes, **caractérisé en ce que** les éléments de positionnement chargés sont déplacés dans la zone d'empilage finale de façon que, à la sortie du transporteur 5, un flux continu de groupes de produits 2 est toujours disponible, ledit flux ayant une valeur préétablie et étant substantiellement égal au flux d'alimentation de la machine d'emballage 30 en aval de ladite sortie du transporteur 5.

5. Procédé selon l'une des revendications précédentes, **caractérisé en ce que** à chaque dispositif de chargement 6 est aussi attribuée, pour chacun des éléments de positionnement 12 présents dans une zone de chargement A1 desdits dispositifs de chargement 6, au moins une des positions préétablies S1-S4 desdits éléments de positionnement où ledit dispositif de chargement peut déposer le produit retiré.

6. Procédé selon l'une des revendications précédentes, **caractérisé en ce que** les attributions d'un nombre maximal préétabli de dépôts d'un produit qu'un dispositif de chargement est autorisé à accomplir pour chaque élément de positionnement situé dans une zone de chargement dudit dispositif peuvent être changées pendant les opérations de groupement des produits.

7. Procédé selon l'une des revendications précédentes, **caractérisé en ce qu'**un délai maximal est attribué par lequel lesdits dispositifs de chargement 6 doivent prélever et déposer un produit dans un élément de positionnement 12 et **en ce que** les attributions sont changées lorsque ledit délai maximal s'est écoulé et que ledit dispositif n'est pas arrivé à prélever et à déposer le produit, le chargement non accompli étant attribué au dispositif de chargement suivant celui qui n'a pas accompli le chargement dans le délai préétabli et l'élément de positionnement où le dépôt n'a pas été accompli dans le délai préétabli avançant vers ledit dispositif suivant.

8. Procédé selon l'une des revendications précédentes, **caractérisé en ce qu'**il vérifie si un élément de positionnement qui a été chargé avec le nombre préétabli de chargements peut avancer d'un dispositif de chargement vers un dispositif de chargement suivant et **en ce qu'**il change les attributions de chargement si ledit avancement n'est pas possible et/ou qu'il change le délai de chargement maximal desdits dispositifs de chargement.

9. Procédé selon l'une des revendications précédentes, **caractérisé en ce qu'**il prévoit un contrôle automatique du nombre d'éléments de positionnement 12 présents dans une zone de chargement A1 des dispositifs de chargement 6 ou dans une zone d'empilement qui précède ladite zone de chargement, il vérifie si une ième zone de chargement (A1i) d'un élément de positionnement suivant celui où ledit contrôle automatique a été effectué est sans éléments de positionnement 12 et il vérifie si aucun élément de positionnement n'est présent dans la ième zone d'empilement (A2i) associée à la dite ième zone de chargement et, en cas de vérification positive, il fait avancer un élément de positionnement d'une zone de chargement précédente vers ladite ième zone de chargement.

10. Procédé selon l'une des revendications précédentes, **caractérisé en ce que**, après qu'un dispositif de chargement a accompli le chargement attribué d'un élément de positionnement, il est vérifié si ledit élément de positionnement peut avancer vers un dispositif de positionnement suivant et **en ce que**, si ladite vérification est négative, le premier dispositif de chargement suivant qui peut accepter un élément de positionnement dans une de ses zones de chargement est cherché et un élément de positionnement est envoyé audit premier dispositif suivant, avançant ainsi tous les éléments de positionnement à partir de celui qui n'a pas pu avancer.

11. Procédé selon l'une des revendications précédentes, **caractérisé en ce que** les dispositifs de chargement 6 déposent les produits dans un élément de positionnement prévu dans une zone de chargement A1 desdits dispositifs de chargement jusqu'à ce que ledit dispositif n'ait atteint le nombre maximal préétabli de dépôts attribués et/ou le délai attribué pour lesdits dépôts, et **en ce que**, si une pluralité d'éléments de positionnement 12 sont présents dans ladite zone de chargement, les dispositifs accomplissent les dépôts à partir de l'élément de positionnement 12 le plus proche au dispositif de chargement suivant.

12. Système pour grouper des produits individuels 1 dans des groupes de produits 2 et pour alimenter ces groupes de produits 2 à des moyens de mise en mouvement 3, en particulier des moyens de mise en mouvement 3 pour amener lesdits groupes de produits à une machine d'emballage 30, par exemple de type « sac thermosoudé » ou garniture d'étanchéité d'encaissage ou similaire, comprenant :
- au moins un premier transporteur 4 pour mettre en mouvement à l'entrée du système une pluralité de produits 1 distribués sur ledit premier transporteur,
- au moins un second transporteur 5 pour mettre en mouvement à la sortie du système lesdits groupes de produits 2, ledit second transporteur 5 comprenant un moteur linéaire incluant un stator 7 et une pluralité d'unités de transport 8, qui se déplacent indépendamment l'une de l'autre, le long du stator, chacune d'elles comprenant au moins un élément de positionnement 12 propre à soutenir lesdits groupes de produits 2,
- une pluralité de dispositifs de chargement 6 propose à prélever au moins un produit individuel à la fois du premier transporteur 4 et le déposer dans lesdits éléments de positionnement 12 du second transporteur,
- où chacun desdits éléments de positionnement 12 prévoit une pluralité de positions de dépôt préétablies (S1-S4) où lesdits dispositifs de chargement déposent lesdits produits individuels 1;
**caractérisé en ce qu'**il comprend :
- au moins une unité de contrôle 25 pour attribuer à chaque dispositif de chargement 6 un nombre maximal préétabli de dépôts d'un produit que ledit dispositif est autorisé à accomplir pour chaque élément de positionnement situé dans une zone de chargement dudit dispositif,
- où ladite au moins une unité de contrôle 25 enregistre en mémoire, pour chaque dépôt accompli par les dispositifs de chargement, la position de dépôt (S1-S4) de l'élément de positionnement où ledit dépôt a été accompli,
- où ladite au moins une unité di contrôle 25 détecte et enregistre en mémoire la position desdites unités de transport 8 pendant leur mise en mouvement au moins le long d'une portion 7A du stator 7.

13. Système selon la revendication 12, **caractérisé en ce qu'**il prévoit dans le second transporteur 5
- une pluralité de zones de chargement A1 des éléments de positionnement 12,
- une pluralité de zones d'empilage intermédiaires A2 prévues entre une zone de chargement et la suivante,
- et une zone d'empilage finale A3 après la dernière zone de chargement,
- où pour chaque dispositif de chargement 6 est prévue une zone de chargement réservée au chargement d'au moins un des éléments de positionnement,
- où les zones d'empilage intermédiaires ont des dimensions telles qu'elles permettent à au moins un élément de positionnement venant de la zone de chargement précédente de transiter et/ou de s'arrêter avant de passer à la zone de chargement suivante,
- et **en ce que** l'au moins une unité de contrôle 25 du système met en mouvement et charge lesdits éléments de positionnement 12 de sorte que dans la zone d'empilage finale une pluralité d'éléments de positionnement chargés sont toujours disponibles, propres à alimenter de façon continue une machine d'emballage 30, en particulier une machine de type « sac thermosoudé ».

14. Système selon l'une des revendications précédentes, caractérisé en ce quel'au moins une unité de contrôle 25 du système vérifie le mouvement des éléments de positionnement 12 dans la zone d'empilement finale A3 de sorte que lesdits éléments de positionnement 12 sont mis en attente l'un après l'autre et/ou sont déplacés à une vitesse constante.

15. Système selon l'une des revendications précédentes, **caractérisé en ce que** l'au moins une unité de contrôle 25 du système vérifie le mouvement des éléments de positionnement dans la zone d'empilement finale A3 de sorte que, à la sortie du transporteur 5, un flux continu de groupes de produits 2 est toujours disponible, ledit flux ayant une valeur préétablie et étant substantiellement égal au flux d'alimentation de la machine d'emballage 30 en aval de ladite sortie du transporteur 5.

16. Système selon l'une des revendications précédentes, **caractérisé en ce que** l'au moins une unité de contrôle 25 attribue aussi à chaque dispositif de chargement 6, pour chacun des éléments de positionnement 12 présents dans une zone de chargement A1 desdits dispositifs de chargement 6, la position préétablie S1-S4 desdits éléments de positionnement 12 où ledit dispositif peut déposer le produit prélevé.

17. Système selon l'une des revendications précédentes, **caractérisé en ce que** l'au moins une unité de contrôle 25 pendant les opérations de groupement des produits change les attributions à chaque dispositif de chargement 6 du nombre maximal préétabli de dépôts d'un produit que ledit dispositif est autorisé à accomplir pour chaque élément de positionnement 12 situé dans une zone de chargement dudit dispositif.

18. Système selon l'une des revendications précédentes, **caractérisé en ce que** l'au moins une unité de contrôle 25 attribue un délai maximal par lequel lesdits dispositifs de chargement 6 doivent prélever et déposer un produit dans un élément de positionnement 12 et **en ce que** ladite unité de contrôle change les attributions à chaque dispositif de chargement 6 du nombre maximal de dépôts d'un produit que ledit dispositif est autorisé à accomplir pour chaque élément de positionnement 12 situé dans une zone de chargement dudit dispositif, lorsque ledit délai maximal s'est écoulé et que ledit dispositif n'est pas arrivé à prélever et à déposer le produit, et **en ce que** ladite au moins une unité de contrôle 25 attribue le chargement non accompli au dispositif de chargement suivant celui qui n'a pas accompli le chargement dans le délai préétabli et fait avancer l'élément de positionnement où le dépôt n'as pas pu être accompli dans le délai préétabli vers ledit dispositif suivant.

19. Système selon l'une des revendications précédentes, **caractérisé en ce que** l'au moins une unité de contrôle 25 vérifie si un élément de positionnement 12 qui a été chargé avec le nombre préétabli de chargements peut avancer d'un dispositif de chargement vers un dispositif de chargement suivant et change les attributions de chargement si ledit avancement n'est pas possible et/ou change le délai de chargement maximal attribué auxdits dispositifs de chargement.

20. Système selon l'une des revendications précédentes, **caractérisé en ce que** l'au moins une unité de contrôle 25 du système, pour chaque dispositif de chargement, détecte le nombre d'éléments de positionnement 12 présents dans une zone de chargement A1 des dispositifs de chargement 6 ou dans une zone d'empilement qui précède ladite zone de chargement et elle vérifie si une ième zone de chargement (A1i) est sans éléments de positionnement 12 et elle vérifie si aucun élément de positionnement n'est présent dans la respective ième zone d'empilement (A2i), et **en ce que** ladite au moins une unité de contrôle 25, en cas de vérification positive, fait avancer un élément de positionnement d'une zone de chargement précédente vers ladite ième zone de chargement.

21. Système selon l'une des revendications précédentes, **caractérisé en ce que** l'au moins une unité de contrôle 25 du système, après qu'un dispositif de chargement 6 a accompli le chargement attribué d'un élément de positionnement 12, vérifie si ledit élément de positionnement 12 peut avancer vers un dispositif de positionnement 6 suivant et, si ladite vérification est négative, ladite au moins une unité de contrôle 25 cherche le premier dispositif de chargement 6 suivant qui peut accepter un élément de positionnement 12 dans une de ses zones de chargement A1, et **en ce que** ladite unité de contrôle envoie un élément de positionnement 12 audit premier dispositif de chargement 6 suivant, avançant ainsi tous les éléments de positionnement 12 à partir de celui qui n'a pas pu avancer.

22. Système selon l'une des revendications précédentes, **caractérisé en ce que** l'au moins une unité de contrôle 25 du système permet aux dispositifs de chargement 6 de déposer les produits dans un élément de positionnement 12 prévu dans une zone de chargement A1 desdits dispositifs de chargement 6 jusqu'à ce que ledit dispositif n'ait atteint le nombre maximal préétabli de dépôts attribués et/ou le délai attribué pour lesdits dépôts, et **en ce que**, si une pluralité d'éléments de positionnement 12 sont présents dans ladite zone de chargement A1, l'unité de contrôle 25 vérifie lesdits dispositifs de chargement 6, de sorte qu'ils accomplissent lesdits dépôts à partir de l'élément de positionnement 12 le plus proche au dispositif de chargement suivant.
